(19) Europäisches Patentamt
European Patent Office
Office européen des brevets

(11) **EP 1 724 775 B1**

(12) # EUROPEAN PATENT SPECIFICATION

(45) Date of publication and mention
of the grant of the patent:
**09.07.2008 Bulletin 2008/28**

(51) Int Cl.:
***G11B 20/00*** *(2006.01)*

(21) Application number: **06113964.8**

(22) Date of filing: **15.05.2006**

(54) **Signal-to-noise ratio measurement apparatus and method for signal read out of optical disc**

Störsignalabstand Meß-apparat und -methode für Signale aus optischer Scheibe.

Appareil et méthode de mesure du rapport signal/bruit pour signal de lecture de disque optique.

(84) Designated Contracting States:
**DE GB NL**

(30) Priority: **16.05.2005 KR 2005040666**

(43) Date of publication of application:
**22.11.2006 Bulletin 2006/47**

(73) Proprietor: **SAMSUNG ELECTRONICS CO., LTD.**
**Suwon-si,**
**Gyeonggi-do (KR)**

(72) Inventors:
• **Park, Hyun-soo**
**Seodaemun-gu**
**Seoul (KR)**
• **Shim, Jae-seong**
**Dongan-gu**
**Gyeonggi-do**
**Suwon-si (KR)**

(74) Representative: **Waddington, Richard et al**
**15 Clare Road**
**Halifax,**
**West Yorkshire HX1 2HY (GB)**

(56) References cited:
**EP-A- 0 605 886      US-A1- 2004 264 023**
**US-B1- 6 980 602**

• **PAULUZZI D R ET AL: "A comparison of SNR estimation techniques for the AWGN channel" October 2000 (2000-10), IEEE TRANSACTIONS ON COMMUNICATIONS, IEEE SERVICE CENTER, PISCATAWAY, NJ, US, PAGE(S) 1681-1691 , XP002289928 ISSN: 0090-6778 * abstract * * page 1681, right-hand column ***

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a measurement apparatus and method for processing a signal read out of an optical disc, and more particularly, to a signal-to-noise ratio measurement apparatus and method for a signal read out of an optical disc, capable of measuring a signal-to-noise ratio by detecting a noise-removed original signal based on, out of a signal read from an optical disc, signals continuously repeated in a certain interval (hereinafter, referred to as repetition signals).

Generally, an information storage medium such as an optical disc is used to record a binary signal on the surface thereof and to reproduce data therefrom, based on a waveform reflected when a laser beam is incident thereon. Typically, a signal read from the surface of an optical disc is a radio frequency (RF) signal. Even though a binary signal is recorded on the surface of the optical disc, an RF signal read from such an optical disc has the characteristics of an analog signal, rather than those of a binary signal. This is due to disc properties and optical characteristics. As a result, a binarization process is needed to convert an analog signal into a digital signal for further processing.

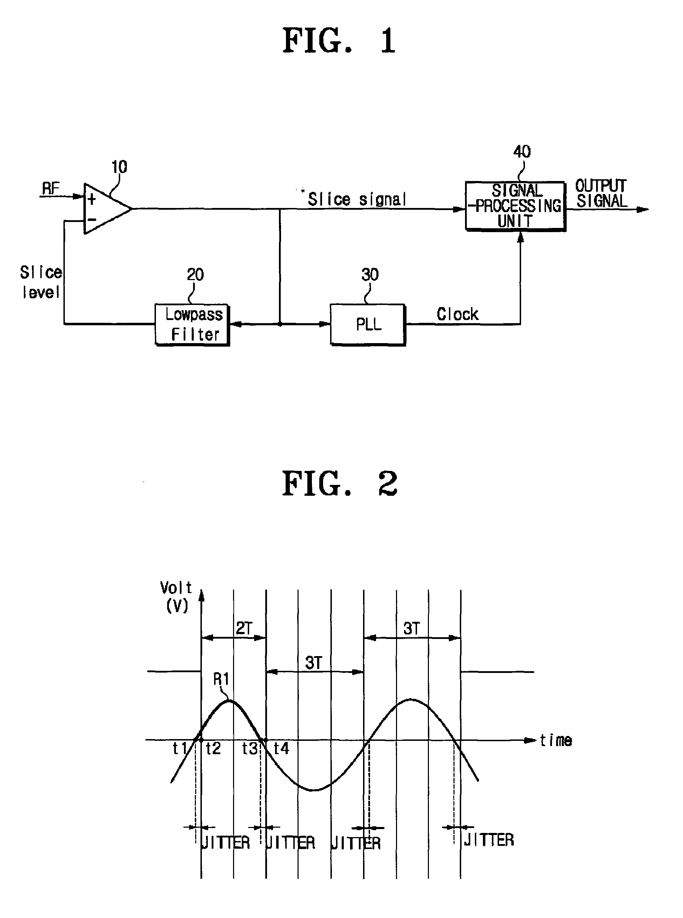

FIG. 1 illustrates an example apparatus for binarizing (or slicing) a signal read from an optical disc. As shown in FIG. 1, such an apparatus is provided with a comparison unit 10, a low-pass filter 20, a Phase Locked Loop (PLL) 30, and a signal-processing unit 40.

The comparison unit 10 receives an RF signal read from an optical disc, and compares the RF signal with a reference voltage. If the RF signal is higher than the reference voltage, the comparison unit 10 outputs a signal of "1" to the signal-processing unit 40. Alternatively, if the RF signal is lower than the reference voltage, the comparison unit 40 outputs a signal of "0" to the signal-processing unit 40. That is, the comparison unit 10 converts the RF signal as an analog signal into a digital signal, and outputs the digital signal to the signal-processing unit 40.

The low-pass filter 20 generates the reference voltage used by the comparison unit 10, using the RF signal outputted from the comparison unit 10.

The signal-processing unit 40 signal-processes the digital (slice) signal outputted from the comparison unit 10 so that information such as a video signal or an audio signal recorded on the optical disc can be reproduced.

The PLL 30 compensates for a reference clock used by the signal-processing unit 40 so that the signal-processing unit 40 can read a digital (slice) signal inputted from the comparison unit 10 according to the reference clock.

FIG. 2 is a graphical view of a conventional method for measuring an error of a signal read from an optical disc by using jitter. In general, a method used for measurement of an error of an RF signal read from an optical disc is to numerically express how many integer times a digital signal representing an RF signal is longer than a pit length on an optical disc. Such a numerical value is referred to as jitter. As a waveform of an RF signal is closer to integer times the pit length at the time the waveform of the RF signal is recorded on an optical disc, the probability for a recorded signal to be judged as an error signal becomes more lowered when a signal recorded on the optical disc is reproduced.

As shown in FIG. 2, an RF signal R1 is larger in magnitude than a reference voltage of the comparison unit 10 for a time period of t1 to t3 during a time period 2T, which is two times the unit length of a pit length. However, out of the time period of 2T, a reference clock exists from t1 to t4 in order for the signal to be read from the optical disc. Accordingly, jitter occurs during time intervals as much as (t2-t1) and (t4-t3) over the duration of the RF signal R1. When the time jitter is high, the RF signal R1 is not judged as "1", but is judged as an error signal.

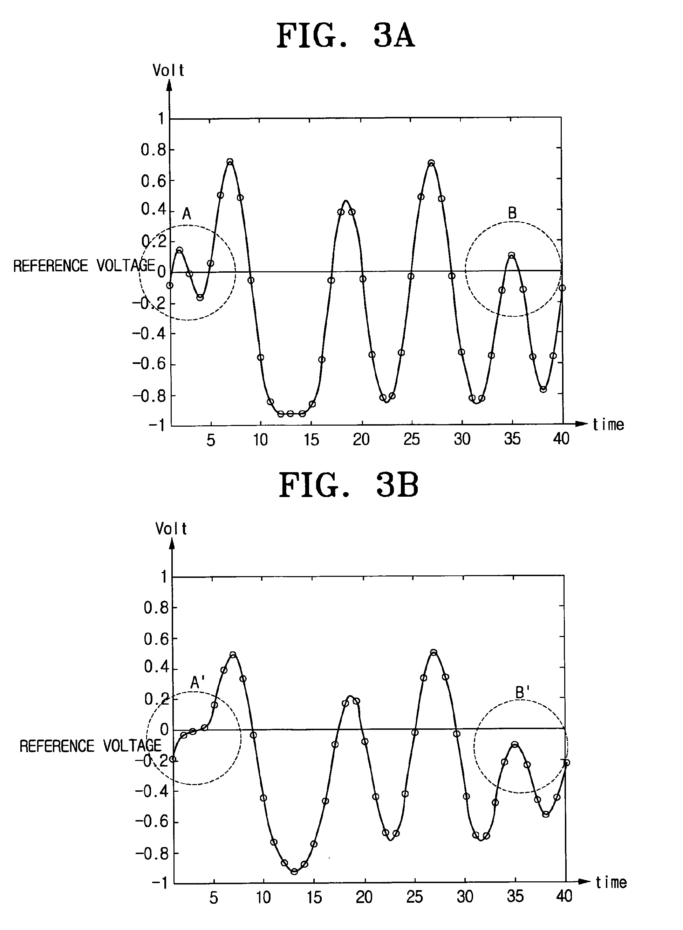

Turning now to FIGs. 3A and 3B, example views of an RF signal read from a low-density optical disc and an RF signal read from a high-density optical disc, respectively, are shown. Specifically, FIG. 3A shows an RF signal read from a low-density optical disc from a time interval A to a time interval B. FIG. 3B shows an RF signal read from a high-density optical disc from a time interval A' to a time interval B'. As for an identical RF signal, FIGs. 3A and 3B show an RF signal read from a low-density optical disc and an RF signal read from a high-density optical disc, respectively.

As shown in FIGs. 3A and 3B, in view of RF signals in time intervals A and A', an RF signal read from a low-density disc has distinct signal portions higher and lower than a reference voltage since the RF signal is recorded in a pit length relatively long compared to the same signal recorded on a high-density disc. However, as for the same signal, an RF signal shown in FIG. 3B read from a high-density disc has values lower than the reference voltage in contrast to the RF signal read from the low-density disc. Accordingly, the RF signal recorded on the high-density disc in a time interval A' has to be outputted as "1" when binarized, but the RF signal can still be judged as an error signal when reproduced.

Further, in view of an RF signal read in a time interval B', shown in FIG. 3B, an RF signal read from a low-density disc has distinct signal portions lower and higher than a reference voltage as the RF signal read in the time interval A', so the read RF signal can be binarized without an error. However, even though there exists a region in the time interval B' in which the RF signal read from a high-density disc has a value higher than the reference voltage, the distinct signal portion is recorded in a short unit length on an optical disc so as to be read as a distinct signal portion lower than the reference voltage. Accordingly, the RF signal in the time interval B' can be judged as an error signal when reproduced.

As described in connection with FIGs. 3A and 3B, as the recording density of an optical disc is getting higher, a signal is recorded in a shorter unit length, and, if the recording density is over a certain level, signals can be generated which fails to satisfy a binarization level.

Since signal portions occur which fails to satisfy a binarization level as the RF signal in the time intervals A' and B' shown in FIG. 3B, jitter as described in connection with FIG. 2 cannot be obtained.

The present invention provides a signal-to-noise ratio measurement apparatus and method for a signal read from an optical disc, capable of measuring a signal-to-noise ratio of an input signal by obtaining an average value of repetition signals, which are continuously repeated, of an input signal in certain intervals and detecting a noise-removed input signal, rather than using jitter, in order to measure the quality of an input signal read from an optical disc.

Additional aspects and/or advantages of the invention will be set forth in part in the description which follows and, in part, will be obvious from the description, or may be learned by practice of the invention.

According to the present invention there is provided an apparatus and method as set forth in the appended claims. Preferred features of the invention will be apparent from the dependent claims, and the description which follows.

In addition to the example embodiments and aspects as described above, further aspects and embodiments will be apparent by reference to the drawings and by study of the following descriptions.

For a better understanding of the invention, and to show how embodiments of the same may be carried into effect, reference will now be made, by way of example, to the accompanying diagrammatic drawings in which:

FIG. 1 is a block diagram of an example apparatus for binarizing a signal read from an optical disc;

FIG. 2 is a graphical view of a conventional method for measuring an error of a signal read from an optical disc by using jitter;

FIGs. 3A and 3B are views for showing an RF signal read from a low-density optical disc and an RF signal read from a high-density optical disc, respectively;

FIG. 4 is a block diagram of an example signal-to-noise ratio measurement apparatus for a signal read from an optical disc according to an embodiment of the present invention;

FIG. 5 is a flow chart of an example signal-to-noise ratio measurement method for a signal read from an optical disc according to an embodiment of the present invention; and

FIGs. 6A to 6D are views for explaining a signal-to-noise ratio measurement method shown in FIG. 5.

Reference will now be made in detail to the present embodiments of the present invention, examples of which are illustrated in the accompanying drawings, wherein like reference numerals refer to the like elements throughout. The embodiments are described below in order to explain the present invention by referring to the figures.

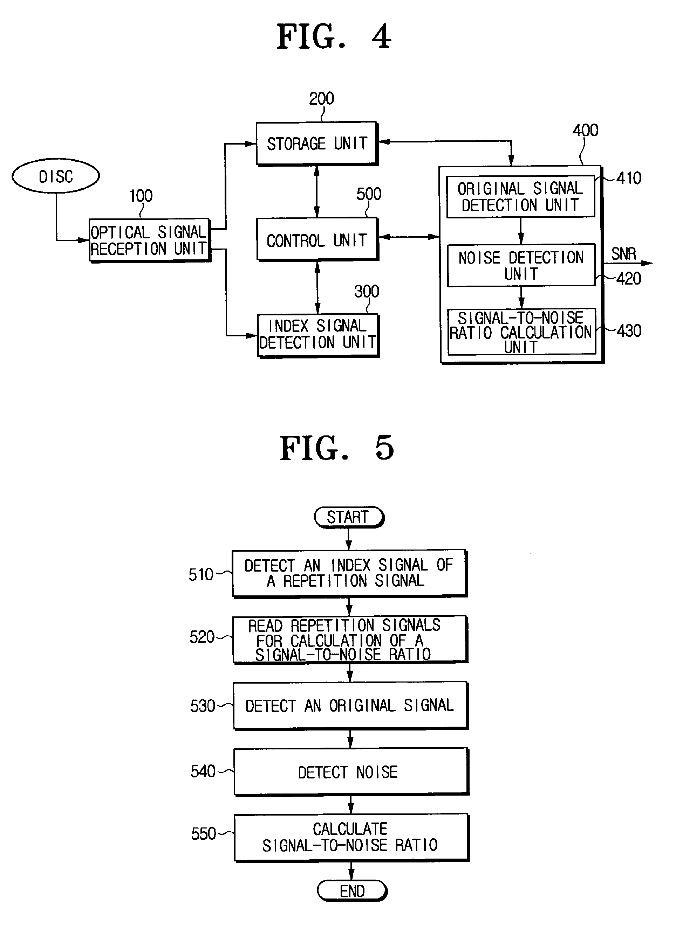

FIG. 4 is a block diagram of an example signal-to-noise ratio measurement apparatus for a signal read from an optical disc according to an embodiment of the present invention. As shown in FIG. 4, the signal-to-noise ratio measurement apparatus comprises an optical signal reception unit 100, a storage unit 200, an index signal detection unit 300, a calculation unit 400, and a control unit 500.

The optical signal reception unit 100 receives an RF signal as an input signal read from an optical disk. The optical signal reception unit 100 detects light reflected from the surface of an optical disc through photo diodes thereof, and converts an electrical current outputted from the photo diodes into voltages. Next, the optical signal reception unit 100 RF-sums the converted voltage signals, converts the RF-summed signals into a quantized digital signal.

The storage unit 200 stores the quantized digital signal outputted from the optical signal reception unit 100.

The index signal detection unit 300 detects an index signal for enabling repetition signals of an input signal in a continuously repeated interval to be identified. The repetition signals represent an input signal that is continuously repeated in a certain interval. These repetition signals are signal portions used for calculations for a signal-to-noise ratio of an input signal read from an optical disc. The index signal represents a signal added to each repeated interval in which repetition signals appear. Further, the index signal is a unique signal in an interval in which repetition signals appear, and the index signal detection unit 300 can detect repetition signals of an input signal by detecting the index signal.

The calculation of a signal-to-noise ratio based on repetition signals can result in "0" as a sum of noise over the repetition signals in a certain interval when an average value is calculated over the repetition signals.

Accordingly, noise contained in a repetition signal can be detected through detection of an original signal from a noise-removed repetition signal, and the detection of noise enables a signal-to-noise ratio to be measured.

The index signal is a signal longer than a basic unit length for data recording on an optical disc, and can be added to each repeated interval in which repetition signals occur. As for an optical disc, the run-length limited (RLL) code is used for data recording, which has limitations as to the minimum and maximum lengths in general. As for a DVD, only a signal having a length of 3T to 11T is used, but a signal of 14T longer than the basic length of 3T to 11T can be added as an index for identifying a repetition signal.

The control unit 500 controls the overall operation of constituent components, including the optical signal reception unit 100, the storage unit 200, the index signal detection unit 300, and the calculation unit 400. Specifically, the control unit 500 controls an output of a signal corresponding to the repetition signal of an input signal stored in the storage unit 200 using an index signal detected by the index signal detector 300.

The calculation unit 400 includes an original signal detection unit 410, a noise detection unit 420, and a signal-to-noise ratio calculation unit 430, and calculates a signal-to-noise ratio of an input signal, using an original signal and a repetition signal.

The original signal detection unit 410 receives from the storage unit 200 a repetition signal detected based on an index signal detected by the index signal detection unit 300. Further, the original signal detection unit 410 rearranges the repetition signals in an interval in which the same repetition signals are repeated, and calculates an average value of the re-arranged repetition signals. If noise contained in the repetition signals has no relations with one another, the average value of noise contained in repetition signals of a certain interval can be considered as "0". Accordingly, the average value of the re-arranged repetition signals can be an original signal for noise-removed repetition signals.

The noise detection unit 420 detects noise contained in a repetition signal based on a difference between an original signal detected by the original signal detection unit 410 and the repetition signals used for calculation of a signal-to-noise ratio of an input signal and stored in the storage unit 200.

The signal-to-noise ratio calculation unit 430 calculates a signal-to-noise ratio of an input signal by calculating a ratio of an original signal to noise detected by the noise detection unit 420.. As previously described, the original signal is an average value of the re-arranged repetition signals which is calculated by the original signal detection unit 410. In turn, the signal-to-noise ratio of the input signal is calculated based on Equation 1 as below.

[Equation 1]

$$\mathrm{SNR} = 10\ \log_{10}((\text{signal power})/(\text{noise power}))$$
$$= 10\ \log_{10}((\text{average}_{\text{sig}})^2/(\text{average}_{\text{sig}} - \text{input}_{\text{sig}})^2)$$
$$= 10\ \log_{10}((\text{average}_{\text{sig}})^2/(\text{noise})^2)$$

wherein SNR (Signal-to-Noise Ratio) represents a signal-to-noise ratio of an input signal, $average_{sig}$ represents the original signal as an average value of repetition signals which is calculated by the original signal detection unit 410, and $input_{sig}$ represents the repetition signals used for detection of the original signal. Further, $noise$ represents noise contained in a repetition signal.

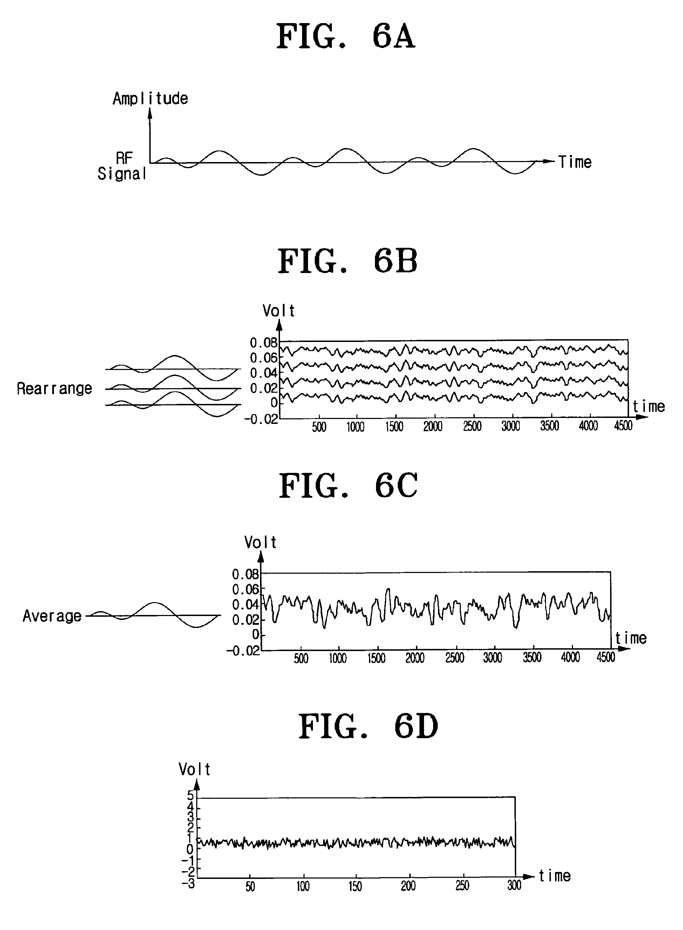

FIG. 5 is a flow chart of an example signal-to-noise ratio measurement method for a signal read from an optical disc according to an embodiment of the present invention. FIGs. 6A to 6D are views for explaining in detail the signal-to-noise ratio measurement method shown in FIG. 5. Specifically, FIG. 6A shows an RF signal read from an optical disc; FIG. 6B shows the re-arrangement of repetition signals in individual intervals repeated; FIG. 6C shows an average value of re-arranged repetition signals; and FIG. 6D shows how noise is obtained based on a difference between an original signal which is an average value of re-arranged repetition signals and a repetition signal.

Referring now to FIG. 5, the signal-to-noise ratio measurement method is performed by the signal-to-noise measurement apparatus shown in FIG. 4. In particular, the signal-to-noise measurement apparatus, as shown in FIG. 4, quantizes and stores an RF signal as an input signal read from an optical disc, and detects an index signal distinct from a repetition signal which is an input signal that is continuously repeated in a certain interval at block 510.

Specifically, the optical signal reception unit 100 detects and converts a laser beam reflected from the surface of an optical disc into a voltage, and performs RF-summing, quantizes, and stores the RF-summed signal in a digital form in the storage unit 200. The RF-summed signal is shown in FIG. 6A. Further, the index signal detection unit 300 detects an index signal for enabling repetition signals to be identified, such that the repetition signals are used to calculate a signal-to-noise ratio of an input signal read from an optical disc. As previously discussed, the index signal is a signal added to each repeated intervals in which repetition signals appear, and is a unique signal in an interval repeated. Accordingly, the repetition signals of an input signal can be detected through detection of an index signal.

Further, the index signal is a signal longer than a basic length for unit data for recording on an optical disc, and can be added to an input signal in individual intervals repeated. As for an optical disc, data is generally recorded by the run-length limited (RLL) code which limits the maximum length and the minimum length. As for a DVD, only a signal having a length of 3T to 11T is used, and an index signal can be added for identifying an input signal of a certain interval as a signal of 14T longer than the basic length of 3T to 11T.

Next, the signal-to-noise measurement apparatus, as shown in FIG. 4, then reads out a stored input signal in the form of repetition signals used for calculation of a signal-to-noise ratio of an input signal at block 520. Specifically, the control unit 500 uses an index signal to detect from the stored input signal a repetition signal used for calculation of a signal-to-noise ratio. At the time an index signal for a repetition signal is detected, the control unit 500 can read out from the stored input signal the repetition signal corresponding to the index signal, since the index signal is unique data in the repeated interval.

Next, the signal-to-noise measurement apparatus, as shown in FIG. 4, calculates an average value of repetition signals read based on the index signal, and detects an original signal of a repetition signal at block 530. The original signal refers to a noise-removed repetition signal. For the detection of the original signal, the repetition signals are re-arranged in individual intervals repeated, and an average value of the re-arranged repetition signals are calculated. FIG. 6B shows the re-arrangement of repetition signals in individual intervals repeated, and FIG. 6C shows an average value of the re-arranged repetition signals.

If noise contained in the repetition signals that are continuously repeated in a certain interval has no relation with one another, an average value of the noise contained in the repetition signals can be considered as "0". Accordingly, an original signal can be detected through removal of noise from repetition signals based on an average value of the re-arranged repetition signals

Next, the signal-to-noise measurement apparatus, as shown in FIG. 4, detects noise contained in the repetition signals based on the original signal and the repetition signals used for the detection of the original signal at block 540.

Specifically, the calculation unit 600 responsive to the control unit 500 detects noise contained in the repetition signals by calculating differences between the original signal and the repetition signals used for the detection of the original signals. Noise of a repetition signal is obtained from subtraction of a noise-carrying repetition signal from an original signal of a noise-free repetition signal. Accordingly, the calculation unit 400 detects noise by calculating a difference between an original signal and a repetition signal.

Noise of a repetition signal is detected, as shown in FIG. 6D, from a difference between an original signal of a noise-removed repetition signal as shown in FIG. 6C and a noise-carrying repetition signal as shown in FIG. 6B.

Next, the calculation unit 400 calculates a signal-to-noise ratio of an input signal by calculating a ratio of an original signal obtained at block 530 to noise detected at block 540. As previously discussed, the original signal is an average value of repetition signals corresponding to an original signal detected at block 530. The signal-to-noise ratio is calculated based on Equation 1 as discussed above.

Accordingly, an original signal of a noise-removed repetition signal is detected, out of an input signal read from an optical disc, based on the repetition signals that are continuously repeated in a certain interval, and can be used as an index for evaluation of the overall characteristics of an optical disc.

Further, a signal-to-noise ratio of an input signal is calculated based on original signals of repetition signals, and can be used at the time an index for evaluation of the characteristics of an over optical disc, disc tilt, and an extent of focusing are optimized. That is, the extent of the optical disc tilt and focusing can be adjusted for reduction of a signal-to-noise ratio. Further, the recording characteristics can be optimized based on the calculated signal-to-noise ratio if an optical disc is a writable disc.

As described above, based on an input signal read from an optical disc, the present invention measures the quality of an optical disc by calculating a signal-to-noise ratio of repetition signals that are continuously repeated in a certain interval, thereby enabling the quality of the optical disc to be measured even if jitter can not be detected since the optical disc has a high recording density. As a result, the present invention can measure the quality of an optical disc using the pit space or mark lower than a certain resolution.

Further, in order to calculate a signal-to-noise ratio of an input signal, the present invention can detect the characteristics of a noise-removed original signal by detecting a noise-free input signal. Furthermore, out of an input signal read from an optical disc, the present invention can detect noise of an input signal by using repetition signals that are continuously repeated in a certain interval, and numerically and objectively detect signals of noise components.

While there have been illustrated and described what are considered to be example embodiments of the present invention, it will be understood by those skilled in the art and as technology develops that various changes and modifications, may be made, and equivalents may be substituted for elements thereof without departing from the true scope of the present invention. Many modifications, permutations, additions and sub-combinations may be made to adapt the teachings of the present invention to a particular situation without departing from the scope thereof. For example, an optical disc can be any recording medium, including DVD, DVD-R, DVD-RW, DVD+RW, DVD-RAM, DVD-ROM, CD, CD-R, CD-RW, and CD-ROM, or alternatively, any high-density medium, such as blue-ray disc (BD) and advanced optical disc (AOD). Similarly, a control unit can be implemented as a chipset having firmware, or alternatively, a general or special purposed computer programmed to perform the methods as described, for example, with reference to FIG. 5. Accordingly, it is intended, therefore, that the present invention not be limited to the various example embodiments disclosed, but that the present invention includes all embodiments falling within the scope of the appended claims.

Although a few preferred embodiments have been shown and described, it will be appreciated by those skilled in the art that various changes and modifications might be made without departing from the scope of the invention, as defined in the appended claims.

**Claims**

1. An apparatus to estimate the quality of an optical disk by signal-to-noise ratio measurement comprising:

   a storage unit (200) to store an input signal read from an optical disc;

   **characterized in that** it further comprises:

   an index signal detection unit (300) arranged to detect an index signal enabling repetition signals to be identified, the repetition signals representing a portion of said input signal that is repeated in a designated time interval; and
   a calculation unit (400) arranged
   to read the repetition signals stored in the storage unit (200) based on the index signal,
   to detect an original signal that is an average value of the repetition signals, to detect noise contained in the repetition signals based on a difference between the original signal and the repetition signals, and
   to calculate a signal-to-noise ratio of the input signal based on said original signal and said noise.

2. The apparatus as claimed in claim 1, wherein the calculation unit (400) comprises:

   an original signal detection unit (410) for re-arranging the repetition signals in the designated interval in which the input signal is repeated, for calculating an average value of the re-arranged repetition signals, and for detecting the original signal of a noise-removed repetition signal;
   a noise detection unit (420) for detecting noise of the repetition signals based on a difference between the original signal and the repetition signals; and
   a signal-to-noise ratio calculation unit (430) for calculating a signal-to-noise ratio of the input signal, based on the original signal and the noise.

3. The apparatus as claimed in claim 2, wherein the signal-to-noise ratio calculation unit (430) calculates the signal-to-noise ratio of the input signal, using the following equation:

$$SNR = 10 \; \log_{10}((average_{sig})^2/(average_{sig} - input_{sig})^2),$$

   wherein SNR represents the signal-to-noise ratio of the input signal, $average_{sig}$ represents the original signal as an average value of the re-arranged repetition signals, and $input_{sig}$ represents the repetition signals used for detecting the original signal.

4. The apparatus as claimed in any preceding claim, wherein the index signal is a unique signal longer than a basic length of unit data that is added to each repeated intervals in which repetition signals occur.

5. The apparatus as claimed in any preceding claim, wherein the signal-to-noise ratio calculation unit (430) calculates the signal-to-noise ratio of the input signal, using the following equation:

$$SNR = 10 \; \log_{10}((average_{sig})^2/(noise)^2),$$

   wherein SNR represents the signal-to-noise ratio of the input signal, $average_{sig}$ represents the original signal as an average value of the re-arranged repetition signals, and noise represents noise contained in the repetition signals.

6. A method to estimate the quality of optical disks by a signal-to-noise ratio measurement of a signal read from an optical disc, comprising:

   storing an input signal read from an optical disc in a storage (200);
   detecting an index signal enabling repetition signals to be identified, the repetition signals representing a portion of said input signal that is repeated in a designated time interval;
   reading the repetition signals stored in the storage (200) based on the index signal; and
   detecting an original signal by averaging said repetition signals, detecting noise of said repetition signals based on a difference value between the original signal and said repetition signals, and calculating a signal-to-noise ratio of the input signal based on the original signal and the noise;

7. The method as claimed in claim 6, wherein the signal-to-noise ratio is calculated by:

re-arranging the repetition signals in the designated interval in which the input signal is repeated, and detecting the original signal of the noise-removed repetition signal based on an average value of the test signals; detecting noise of the test signals based on a difference between the original signal and the repetition signals; and calculating the signal-to-noise ratio of the input signal based on the original signal and the noise.

8. The method as claimed in claim 7, wherein the signal-to-noise ratio is calculated based on the following equation:

$$SNR = 10 \log_{10}((average_{sig})^2/(average_{sig} - input_{sig})^2),$$

wherein SNR represents the signal-to-noise ratio of the input signal, $average_{sig}$ represents the original signal as an average value of the re-arranged repetition signals, and $input_{sig}$ represents the repetition signals used for detecting the original signal.

9. The method as claimed in any one of claims 4 to 8, wherein the index signal is a unique signal longer than a basic length of unit data that is added to each repeated intervals in which repetition signals occur.

10. The method as claimed in any one of claims 6 to 9, wherein the signal-to-noise ratio of the input signal is calculated using the following equation:

$$SNR = 10 \log_{10}((average_{sig})^2/(noise)^2),$$

wherein SNR represents the signal-to-noise ratio of the input signal, $average_{sig}$ represents the original signal as an average value of the re-arranged repetition signals, and noise represents noise contained in the repetition signals.


**Patentansprüche**

1. Vorrichtung zum Schätzen der Qualität einer optischen Speicherplatte durch Messung des Signal-Rausch-Verhältnisses, die umfasst:

eine Speichereinheit (200) zum Speichern eines Eingangssignals, das von einer optischen Speicherplatte gelesen wird;

**dadurch gekennzeichnet, dass** sie des Weiteren umfasst:

eine Indexsignal-Erfassungseinheit (300), die so angeordnet ist, dass sie ein Indexsignal erfasst, das ermöglicht, dass Wiederholungssignale erkannt werden, wobei die Wiederholungssignale einen Abschnitt des Eingangssignals darstellen, der in einem bestimmten Zeitintervall wiederholt wird; und eine Berechnungseinheit (400), die so angeordnet ist, dass sie die in der Speichereinheit (200) gespeicherten Wiederholungssignale auf Basis des Indexsignals liest, ein Quellsignal erfasst, das ein Durchschnittswert der Wiederholungssignale ist, Rauschen, das in den Wiederholungssignalen enthalten ist, auf Basis einer Differenz zwischen dem Quellsignal und den Wiederholungssignalen erfasst und ein Signal-Rausch-Verhältnis des Eingangssignals auf Basis des Quellsignals und des Rauschens berechnet.

2. Vorrichtung nach Anspruch 1, wobei die Berechnungseinheit (400) umfasst:

eine Quellsignal-Erfassungseinheit (410) zum Umformen der Wiederholungssignale in dem bestimmten Intervall, in dem das Eingangssignal wiederholt wird, zum Berechnen eines Durchschnittswertes der umgeformten Wiederholungssignale und zum Erfassen des Quellsignals eines Wiederholungssignals, aus dem das Rauschen entfernt worden ist;

eine Rauscherfassungseinheit (420) zum Erfassen des Rauschens der Wiederholungssignale auf Basis einer Differenz zwischen dem Quellsignal und den Wiederholungssignalen; und

eine Signal-Rausch-Verhältnis-Berechnungseinheit (430) zum Berechnen eines Signal-Rausch-Verhältnisses des Eingangssignals auf Basis des Quellsignals und des Rauschens.

3. Vorrichtung nach Anspruch 2, wobei die Signal-Rausch-Verhältnis-Berechnungseinheit (430) das Signal-Rausch-Verhältnis des Eingangssignals unter Verwendung der folgenden Gleichung berechnet:

$$SRV = 10 \log_{10}((Durchschnitt_{sig})^2 / (Durchschnitt_{sig} - Eingang_{sig})^2),$$

wobei SRV das Signal-Rausch-Verhältnis des Eingangssignals, Durchschnitt$_{sig}$ das Quellsignal als einen Durchschnittswert der umgeformten Wiederholungssignale und Eingang$_{sig}$ die zum Erfassen des Quellsignals eingesetzten Wiederholungssignale darstellt.

4. Vorrichtung nach einem der vorangehenden Ansprüche, wobei das Indexsignal ein eindeutiges Signal ist, das länger als eine Grundlänge von Einheitendaten ist, das zu allen wiederholten Intervallen addiert wird, in denen Wiederholungssignale auftreten.

5. Vorrichtung nach einem der vorangehenden Ansprüche, wobei die Signal-Rausch-Verhältnis-Berechnungseinheit (430) das Signal-Rausch-Verhältnis des Eingangssignals unter Verwendung der folgenden Gleichung berechnet:

$$SRV = 10 \log_{10}((Durchschnitt_{sig})^2 / (Rauschen)^2),$$

wobei SRV das Signal-Rausch-Verhältnis des Eingangssignals, Durchschnitt$_{sig}$ das Quellsignal als einen Durchschnittswert des umgeformten Wiederholungssignals und Rauschen das in den Wiederholungssignalen enthaltene Rauschen darstellt.

6. Verfahren zum Schätzen der Qualität von optischen Speicherplatten durch Messung des Signal-Rausch-Verhältnisses eines von einer optischen Speicherplatte gelesenen Signals, das umfasst:

Speichern eines Eingangssignals, das von einer optischen Speicherplatte in einem Speicher (200) gelesen wird;
Erfassen eines Indexsignals, das ermöglicht, dass Wiederholungssignale erkannt werden, wobei die Wiederholungssignale einen Abschnitt des Eingangssignals darstellen, das in einem bestimmten Zeitintervall wiederholt wird;
Lesen der Wiederholungssignale in dem Speicher (200) auf Basis des Indexsignals; und
Erfassen eines Quellsignals durch Mitteln der Wiederholungssignale, Erfassen von Rauschen der Wiederholungssignale auf Basis eines Differenzwertes zwischen dem Quellsignal und den Wiederholungssignalen und Berechnen eines Signal-Rausch-Verhältnisses des Eingangssignals auf Basis des Quellsignals und des Rauschens.

7. Verfahren nach Anspruch 6, wobei das Signal-Rausch-Verhältnis berechnet wird durch:

Umformen der Wiederholungssignale in dem bestimmten Intervall, in dem das Eingangssignal wiederholt wird, und Erfassen des Quellsignals des Wiederholungssignals, aus dem das Rauschen entfernt worden ist, auf Basis eines Durchschnittswertes der Wiederholungssignale;
Erfassen des Rauschens der Wiederholungssignale auf Basis einer Differenz zwischen dem Quellsignal und den Wiederholungssignalen; und
Berechnen des Signal-Rausch-Verhältnisses des Eingangssignals auf Basis des Quellsignals und des Rauschens.

8. Verfahren nach Anspruch 7, wobei das Signal-Rausch-Verhältnis auf Basis der folgenden Gleichung berechnet wird:

$$SRV = 10 \log_{10}((Durchschnitt_{sig})^2 / (Durchschnitt_{sig} - Eingang_{sig})^2),$$

wobei SRV das Signal-Rausch-Verhältnis des Eingangssignals, Durchschnitt$_{sig}$ das Quellsignal als einen Durchschnittswert der umgeformten Wiederholungssignale und Eingang$_{sig}$ die zum Erfassen des Quellsignals eingesetzten Wiederholungssignale darstellt.

9.  Vorrichtung nach einem der Ansprüche 4 bis 8, wobei das Indexsignal ein eindeutiges Signal ist, das länger als eine Grundlänge von Einheitendaten ist, das zu allen wiederholten Intervallen addiert wird, in denen Wiederholungssignale auftreten.

10. Verfahren nach einem der Ansprüche 6 bis 9, wobei das Signal-Rausch-Verhältnis des Eingangssignals unter Verwendung der folgenden Gleichung berechnet wird:

$$SRV = 10 \log_{10}((Durchschnitt_{sig})^2 / (Rauschen)^2),$$

wobei SRV das Signal-Rausch-Verhältnis des Eingangssignals, Durchschnitt$_{sig}$ das Quellsignal als einen Durchschnittswert der umgeformten Wiederholungssignale und Rauschen das in den Wiederholungssignalen enthaltene Rauschen darstellt.

## Revendications

1.  Appareil pour évaluer la qualité d'un disque optique par mesure du rapport signal/bruit, comprenant :

    une unité de stockage (200) pour stocker un signal d'entrée lu sur un disque optique ;

    **caractérisé en ce qu'**il comprend en outre :

    une unité de détection de signal d'indice (300) aménagée pour détecter un signal d'indice permettant l'identification de signaux de répétition, les signaux de répétition représentant une partie dudit signal d'entrée qui est répétée dans un intervalle de temps déterminé ; et
    une unité de calcul (400) aménagée pour
    lire les signaux de répétition stockés dans l'unité de stockage (200) en se basant sur le signal d'indice,
    détecter un signal d'origine qui est une valeur moyenne des signaux de répétition,
    détecter le bruit contenu dans les signaux de répétition en se basant sur une différence entre le signal d'origine et les signaux de répétition et
    calculer un rapport signal/bruit du signal d'entrée en se basant sur ledit signal d'origine et sur ledit bruit.

2.  Appareil selon la revendication 1, dans lequel l'unité de calcul (400) comprend :

    une unité de détection de signaux d'origine (410) pour réaménager les signaux de répétition dans l'intervalle déterminé, dans lequel le signal d'entrée est répété, calculer une valeur moyenne des signaux de répétition réaménagés et détecter le signal d'origine d'un signal de répétition dont le bruit a été éliminé ;
    une unité de détection de bruit (420) pour détecter le bruit des signaux de répétition en se basant sur une différence entre le signal d'origine et les signaux de répétition ; et
    une unité de calcul du rapport signal/bruit (430) pour calculer un rapport signal/bruit du signal d'entrée en se basant sur le signal d'origine et sur le bruit.

3.  Appareil selon la revendication 2, dans lequel l'unité de calcul du rapport signal/bruit (430) calcule le rapport signal/bruit du signal d'entrée en utilisant l'équation suivante :

$$SNR = 10 \log_{10} ((\text{moyenne}_{sig})^2 / (\text{moyenne}_{sig} - \text{entrée}_{sig})^2),$$

dans laquelle SNR représente le rapport signal/bruit du signal d'entrée, l'expression $\text{moyenne}_{sig}$ représente le signal d'origine sous la forme d'une valeur moyenne des signaux de répétition réaménagés, et l'expression $\text{entrée}_{sig}$ représente les signaux de répétition utilisés pour détecter le signal d'origine.

4. Appareil selon l'une quelconque des revendications précédentes, dans lequel le signal d'indice est un signal unique plus long qu'une longueur basique de données unitaires qui est ajoutée à chaque intervalle répété dans lequel des signaux de répétition se produisent.

5. Appareil selon l'une quelconque des revendications précédentes, dans lequel l'unité de calcul du rapport signal/bruit (430) calcule le rapport signal/bruit du signal d'entrée en utilisant l'équation suivante :

$$SNR = 10 \log_{10} ((\text{moyenne}_{sig})^2 / (\text{bruit})^2) ,$$

dans laquelle SNR représente le rapport signal/bruit du signal d'entrée, l'expression $\text{moyenne}_{sig}$ représente le signal d'origine sous la forme d'une valeur moyenne des signaux de répétition réaménagés et le terme bruit représente le bruit contenu dans les signaux de répétition.

6. Procédé pour évaluer la qualité de disques optiques par mesure du rapport signal/bruit d'un signal lu sur un disque optique, comprenant :

le stockage d'un signal d'entrée lu sur un disque optique dans une mémoire (200) ;
la détection d'un signal d'indice permettant d'identifier des signaux de répétition, les signaux de répétition représentant une partie dudit signal qui est répétée dans un intervalle de temps déterminé ;
la lecture des signaux de répétition stockés dans la mémoire (200) en se basant sur le signal d'indice ; et
la détection d'un signal d'origine en calculant la moyenne desdits signaux de répétition, la détection du bruit desdits signaux de répétition en se basant sur une valeur de différence entre le signal d'origine et lesdits signaux de répétition, et le calcul d'un rapport signal/bruit du signal d'entrée en se basant sur le signal d'origine et le bruit.

7. Procédé selon la revendication 6, dans lequel le rapport signal/bruit est calculé par

réaménagement des signaux dans l'intervalle déterminé, dans lequel le signal d'entrée est répété et détection du signal d'origine du signal de répétition dont on a éliminé le bruit en se basant sur une valeur moyenne des signaux d'essai ;
détection du bruit des signaux d'essai en se basant sur une différence entre le signal d'origine et les signaux de répétition ; et
calcul du rapport signal/bruit du signal d'entrée en se basant sur le signal d'origine et sur le bruit.

8. Procédé selon la revendication 7, dans lequel le rapport signal/bruit est calculé en se basant sur l'équation suivante :

$$SNR = 10 \log_{10}((\text{moyenne}_{sig})^2 / (\text{moyenne}_{sig} - \text{entrée}_{sig})^2),$$

dans laquelle SNR représente le rapport signal/bruit du signal d'entrée, l'expression $\text{moyenne}_{sig}$ représente le signal d'origine sous la forme d'une valeur moyenne des signaux de répétition réaménagés, et l'expression $\text{entrée}_{sig}$ représente les signaux de répétition utilisés pour détecter le signal d'origine.

9. Procédé selon l'une quelconque des revendications 4 à 8, dans lequel le signal d'indice est un signal unique plus long qu'une longueur basique de données unitaires qui est ajoutée à chaque intervalle répété dans lequel des signaux de répétition se produisent.

10. Procédé selon l'une quelconque des revendications 6 à 9, dans lequel le rapport signal/bruit du signal d'entrée est calculé à l'aide de l'équation suivante :

$$\text{SNR} = 10 \log_{10} ((\text{moyenne}_{sig})^2 / (\text{bruit})^2),$$

dans laquelle SNR représente le rapport signal/bruit du signal d'entrée, l'expression moyenne$_{sig}$ représente le signal d'origine sous la forme d'une valeur moyenne des signaux de répétition réaménagés et le terme bruit représente le bruit contenu dans les signaux de répétition.

# FIG. 1

# FIG. 2

# FIG. 3A

# FIG. 3B

# FIG. 4

200

STORAGE UNIT

400

ORIGINAL SIGNAL
DETECTION UNIT ~410

DISC

100

OPTICAL SIGNAL
RECEPTION UNIT

500

CONTROL UNIT

NOISE DETECTION
UNIT

SNR

~420

300

INDEX SIGNAL
DETECTION UNIT

SIGNAL-TO-NOISE
RATIO CALCULATION
UNIT ~430

# FIG. 5

START

510 — DETECT AN INDEX SIGNAL OF
A REPETITION SIGNAL

520 — READ REPETITION SIGNALS
FOR CALCULATION OF A
SIGNAL-TO-NOISE RATIO

530 — DETECT AN ORIGINAL SIGNAL

540 — DETECT NOISE

550 — CALCULATE
SIGNAL-TO-NOISE RATIO

END

# FIG. 6A

# FIG. 6B

# FIG. 6C

# FIG. 6D